(19) Europäisches Patentamt
European Patent Office
Office européen des brevets

(11) **EP 2 025 578 A1**

(12) **EUROPÄISCHE PATENTANMELDUNG**

(43) Veröffentlichungstag:
**18.02.2009 Patentblatt 2009/08**

(51) Int Cl.:
**B62D 6/00** (2006.01)   **B62D 7/15** (2006.01)
**B62D 61/10** (2006.01)

(21) Anmeldenummer: **08011826.8**

(22) Anmeldetag: **01.07.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **16.08.2007   DE 102007038575**

(71) Anmelder: **WABCO GmbH**
**30432 Hannover (DE)**

(72) Erfinder: **Heuer, Bernd**
**31171 Nordstemmen (DE)**

(54) **Verfahren zum Einstellen eines Lenkwinkels einer elektronisch gelenkten Achse eines Nutzfahrzeuges**

(57)   Die Erfindung betrifft ein Verfahren zum Einstellen eines Lenkwinkels ($\delta$HA) einer elektronisch gelenkten Achse (NLA) eines Nutzfahrzeuges (1),
wobei der Lenkwinkel ($\delta$HA) der elektronisch lenkbaren Achse (NLA) aus zumindest einem Lenkwinkel ($\delta$HA) einer weiteren Achse (VA) und der Fahrzeuggeometrie (11, 12) ermittelt und eingestellt wird.

Hierbei ist vorgesehen, dass bei Erkennen eines instabilen Fahrzustandes der Lenkwinkel ($\delta$HA) der elektronisch lenkbaren Achse (NLA) geändert wird.

Die elektronisch gelenkte Achse kann insbesondere eine Nachlaufachse (NLA) sein, wobei zusätzlich eine Vorderachse (VA) und eine Triebachse (TA) vorgesehen sind.

Insbesondere kann bei Erkennen eines Untersteuervorgangs oder des Beginns eines Untersteuervorganges der Lenkwinkel ($\delta$HA) der elektronisch lenkbaren Achse (NLA) vergrößert und bei Erkennen eines Übersteuervorganges oder des Beginns eines Übersteuervorganges der Lenkwinkel ($\delta$HA) verkleinert werden.

**Fig. 1**

**Beschreibung**

Die Erfindung betrifft ein Verfahren zum Einstellen eines Lenkwinkels einer elektronisch gelenkten Achse eines Nutzfahrzeuges. Die elektronisch gelenkte Achse kann insbesondere eine Nachlaufachse sein, die zusätzlich zu einer Vorderachse und einer Triebachse vorgesehen ist.

Es ist bekannt, den Fahrzustand von Nutzfahrzeugen durch unterschiedliche Messsignale auf Instabilitäten hin zu überwachen, um den Fahrzustand durch selektive Bremseneingriffe zu stabilisieren. Hierbei sind EBS (Elektronische Bremssysteme) und FDR (Fahrdynamikregelungs)-Systeme, z. B. auch ESP (elektronisches Stabilitätsprogramm)-Systeme bekannt, bei denen der Fahrzustand aus z. B. den Raddrehzahlen, einer direkt (über einen Querbeschleunigungssensor) oder indirekt ermittelten Querbeschleunigung, der Gierwinkelgeschwindigkeit, den Lenkwinkeln der Vorderachse und Hinterachse sowie dem ermittelten Schwimmwinkel oder der Schwimmwinkelgeschwindigkeit ermittelt wird.

Zur Verbesserung des Kurvenverhaltens werden bei einigen Nutzfahrzeugen, insbesondere Bussen, elektronisch geregelte Hinterachs-Lenkanlagen, insbesondere von Nachlaufachsen, eingesetzt. Hierbei wird der Lenkwinkel der Nachlaufachse in Abhängigkeit von der Fahrzeuggeometrie, insbesondere den Abständen der Achsen, dem Vorderachs-Lenkwinkel und gegebenenfalls auch der Fahrgeschwindigkeit eingestellt, um die Kurvenfahrt zu unterstützen.

Der Erfindung liegt die Aufgabe zu Grunde, mit relativ geringem zusätzlichen Aufwand eine hohe Stabilität des Nutzfahrzeuges zu erreichen und Instabilitäten des Fahrzeuges entgegen zu wirken.

Diese Aufgabe wird durch ein Verfahren nach Anspruch 1 gelöst. Die Unteransprüche beschreiben bevorzugte Weiterbildungen.

Der Erfindung liegt der Gedanke zu Grunde, Instabilitäten des Fahrzeuges durch eine Veränderung des Lenkwinkels der elektronisch geregelten Achse entgegen zu wirken. Bei einer ohnehin elektronisch geregelt gelenkten Achse, insbesondere einer Nachlaufachse, ist somit kein apparativer Mehraufwand erforderlich. Die Steuereinrichtung der elektronisch geregelten Achse enthält entsprechende Informationen des EBS- Systems bzw. FDR-Systems, um den Lenkwinkel der gelenkten Achse entsprechend zu verändern.

Bei einer Nachlaufachse kann bei Feststellen eines Untersteuervorgangs bzw. einer Untersteuerneigung insbesondere der Lenkwinkel vergrößert werden; entsprechend kann bei Feststellen eines Übersteuervorgangs bzw. einer Übersteuerneigung der Lenkwinkel der Nachlaufachse verkleinert werden.

Statt einer Nachlaufachse kann auch eine andere elektronisch gelenkte Achse, z. B. eine Vorlaufachse der hinteren Triebachse oder grundsätzlich auch eine Vorderachse erfindungsgemäß angesteuert werden.

Die erfindungsgemäße Veränderung des Lenkwinkels der gelenkten Achse kann auf Grundlage sämtlicher Fahrdynamik-Signale, d. h. insbesondere der Fahrgeschwindigkeit, der Raddrehzahlen, der Gierwinkelgeschwindigkeit, Querbeschleunigung, des Lenkwinkels der Vorderachse und der gelenkten Achse sowie des Schwimmwinkels und der Schwimmwinkelgeschwindigkeit ermittelt werden.

Erfindungsgemäß können Grenzwerte eingeführt werden, unterhalb von denen die erfindungsgemäße Veränderung des Lenkwinkels der elektronisch gelenkten Achse nicht durchgeführt wird, so dass erst bei Feststellen einer größeren Unter- oder Übersteuerneigung die zusätzliche Anpassung des Lenkwinkels der elektronisch gelenkten Achse durchgeführt wird. Die Anpassung selbst kann durch eine entsprechende Berechnung aus den Fahrzustands-Signalen oder über eine Kennlinie erfolgen.

Erfindungsgemäß kann weiterhin die zeitliche Dynamik der Änderung des Fahrzustandes berücksichtigt werden; so kann z. B. erkannt werden, wenn - in Abhängigkeit der Bereifung und des Reibwertes - aus seiner anfänglichen Untersteuersituation eine Übersteuerung erfolgt. Für diesen Fall kann vorgesehen sein, den Lenkwinkel der elektronisch gelenkten Achse nicht derartig zu verändern, d.h. bei einer Nachlaufachse nicht zu vergrößern, um die spätere Übersteuerneigung nicht zu unterstützen.

Hierbei kann diese zeitliche Veränderung aus dem Steuerungssystem bzw. der Steuereinrichtung des Fahrdynamik-Regelungssystems erkannt und an die Steuerung der elektronisch gelenkten Achse mitgeteilt werden; weiterhin können derartige Beurteilungen auch von der Steuerung der Achse selbst durchgeführt werden.

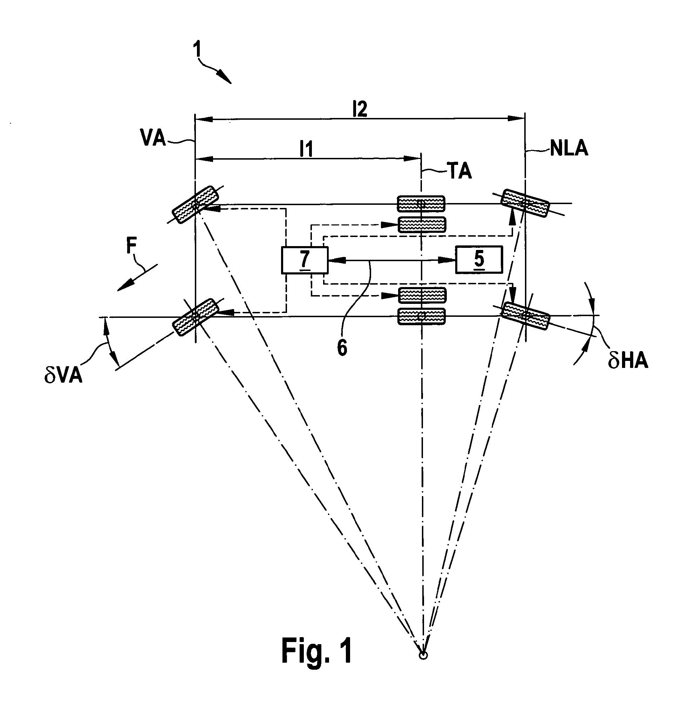

Die Erfindung wird im Folgenden anhand der beiliegenden Zeichnung an einer Ausführungsform mit einer elektronisch gelenkten Nachlaufachse näher erläutert. Die Fig. 1 zeigt eine Aufsicht auf die Stellung der Räder eines Nutzfahrzeuges in einer Kurvenfahrt.

Ein in Figur 1 dargestellter Reisebus 1 weist eine Vorderachse VA, eine vorzugsweise doppelt bereifte Triebachse TA und eine Nachlaufachse NLA auf. Entsprechend dem vom Fahrer über das Lenkrad eingegebenen Soll-Lenkwinkel wird der Lenkwinkel $\delta VA$ der Vorderachse VA gegenüber der Längsachse des Fahrzeuges eingestellt.

Weiterhin wird in an sich bekannter Weise der Lenkwinkel $\delta HA$ der Nachlaufachse NLA eingestellt, um die Kurvenfahrt zu unterstützen. Die Einstellung des Lenkwinkels $\delta HA$ der Nachlaufachse NLA erfolgt in an sich bekannter Weise gemäß der Formel

$$\delta HA = \arctan[(l1-l2)/l1 * \tan \delta VA]$$

wobei 11 = Abstand zwischen VA und TA, 12 = Abstand zwischen VA und NLA ist.

Die Steuerung der Nachlaufachse NLA erfolgt über eine NLA-Steuereinrichtung 5, die über z. B. den fahrzeuginternen CAN-Bus 6 (oder auch eine direkte Datenverbindung) entsprechende Daten von einer FDR(Fahrdynamikregelungs)-Steuereinrichtung 7 erhält, die in an sich bekannter Weise verschiedene den Fahrzustand beschreibende Signale aufnimmt, unter anderem die Raddrehzahlen n1, n2, ... der Räder der Achsen VA, TA, NLA, den vom Fahrer eingegebenen Soll-Lenkwinkel, die Fahrzeuggeschwindigkeit, vorteilhafterweise auch z. B. die Gierwinkelgeschwindigkeit, Querbeschleunigung und ggf. den Schwimmwinkel und die Schwimmwinkelgeschwindigkeit. Für die Ansteuerung der Nachlaufachse NLA können sämtliche FDR-Signale berücksichtigt werden, um eine differenzierte Ansteuerung der Nachlaufachse NLA zu ermöglichen.

Die FDR-Steuereinrichtung 7 kann insbesondere ein ABS sowie ggf. ein EBS und/oder ESP durchführen, d. h. selektiv in die Bremsen der einzelnen Räder der drei Achsen VA, TA und NLA eingreifen, um instabile Zustände zu vermeiden oder zu beheben; weiterhin kann die FDR-Steuereinrichtung 7 auch die Bremskraftverteilung an den drei Achsen VA, TA, NLA einstellen.

Erfindungsgemäß teilt die FDR-Steuereinrichtung 7 bei Erkennen eines instabilen Fahrzustandes dies der NLA-Steuereinrichtung 5 mit, damit diese den Nachlaufachs-Lenkwinkel δHA ändert. Hierbei kann insbesondere bei Erkennen einer Übersteuerung oder Übersteuerneigung, bei der der Schräglaufwinkel an der Nachlaufachse NLA größer als der Schräglaufwinkel der Vorderachse VA ist, zusätzlich zu den weiteren FDR-Maßnahmen durch einen Bremseneingriff der Nachlaufachs-Lenkwinkel δHA verkleinert werden; entsprechend wird bei Erkennen einer Untersteuerung oder Untersteuer-Neigung der Nachlaufachs-Lenkwinkel δHA vergrößert. Hierbei wird der Schräglaufwinkel der Vorderachse VA und Nachlaufachse NLA durch die Abweichung der Lenkwinkel δVA, δHA gegenüber der Fahrtrichtung F der einzelnen Räder ermittelt.

Erfindungsgemäß kann bei einem heftigen Übersteuern auch die Nachlaufachse gesperrt werden, d. h. δHA = 0 gesetzt werden.

Erfindungsgemäß kann weiterhin eine Regelung erfolgen, die die Bereifung und den Reibwert berücksichtigt. Weiterhin kann die FDR-Steuerung 7 aus dem Verlauf der Regelsignale erkennen, ob aus dem Untersteuern vermutlich bald ein Übersteuern wird und in diesem Fall den Lenkwinkel δHA der Nachlaufachse NLA nicht vergrößern.

**Patentansprüche**

1.  Verfahren zum Einstellen eines Lenkwinkels (δHA) einer elektronisch gelenkten Achse (NLA) eines Nutzfahrzeuges (1),
    wobei der Lenkwinkel (δHA) der elektronisch lenkbaren Achse (NLA) aus zumindest einem Lenkwinkel (δHA) einer weiteren Achse (VA) und der Fahrzeuggeometrie (11, 12) ermittelt und eingestellt wird,
    **dadurch gekennzeichnet, dass**
    bei Erkennen eines instabilen Fahrzustandes der Lenkwinkel (δHA) der elektronisch lenkbaren Achse (NLA) geändert wird.

2.  Verfahren nach Anspruch 1, **dadurch gekennzeichnet, dass**
    die elektronisch lenkbare Achse eine Nachlaufachse (NLA) des Nutzfahrzeuges (1) ist, das weiterhin eine Vorderachse (VA) und eine Triebachse (TA) aufweist, wobei der Lenkwinkel (δHA) der Nachlaufachse (NLA) aus zumindest einem Vorderachs-Lenkwinkel (δHA) und der Fahrzeuggeometrie (11, 12) ermittelt und eingestellt wird.

3.  Verfahren nach Anspruch 1 oder 2, **dadurch gekennzeichnet, dass** bei Erkennen eines Untersteuervorgangs oder des Beginns eines Untersteuervorganges der Lenkwinkel (δHA) der elektronisch lenkbaren Achse (NLA) vergrößert wird.

4.  Verfahren nach Anspruch 1 oder 2, **dadurch gekennzeichnet, dass** bei Erkennen eines Übersteuervorganges oder des Beginns eines Übersteuervorganges der Lenkwinkel (δHA) der elektronisch lenkbaren Achse (NLA) verkleinert wird.

5.  Verfahren nach einem der vorherigen Ansprüche, **dadurch gekennzeichnet, dass** die Beurteilung des Fahrzustandes aus einer oder mehreren der folgenden Messsignalen oder aus Messsignalen abgeleiteten Zustandssignalen ermittelt wird:

Gierwinkelgeschwindigkeit, Querbeschleunigung, Lenkwinkel ($\delta$VA) einer weiteren Achse, insbesondere der Vorderachse (VA), Lenkwinkel ($\delta$HA) der elektronisch gelenkten Aachse (NLA), Schwimmwinkel, Schwimmwinkelgeschwindigkeit, Fahrgeschwindigkeit.

6. Verfahren nach einem der vorherigen Ansprüche, **dadurch gekennzeichnet, dass** bei Feststellen eines Übersteuervorgangs oder eines hinreichend großen Übersteuervorgangs die Lenkung der elektronisch gelenkten Achse (NLA) ganz gesperrt wird.

7. Verfahren nach einem der vorherigen Ansprüche, **dadurch gekennzeichnet, dass** bei Feststellen, dass ein aktueller instabiler Fahrzustand, z. B. ein Untersteuern, in einem vorgegebenen Zeitabstand in einen anderen instabilen Fahrzustand, z. B. ein Übersteuern, übergeht, bereits der voraussichtlich auftretende neue instabile Fahrzustand berücksichtigt und der Lenkwinkel der elektronisch gelenkten Achse (NLA) entsprechend eingestellt wird.

8. Verfahren nach einem der vorherigen Ansprüche, **dadurch gekennzeichnet, dass** zusätzlich zu einer Änderung des Lenkwinkels der elektronisch gelenkten Achse (NLA) Bremseneingriffe zur Stabilisierung des Fahrzustandes durchgeführt werden.

9. Verfahren nach einem der vorherigen Ansprüche, **dadurch gekennzeichnet, dass** das Nutzfahrzeug ein Reisebus ist.

10. Verfahren nach einem der vorherigen Ansprüche, **dadurch gekennzeichnet, dass** für die Untersteuerneigung und Übersteuerneigung Grenzwerte eingeführt werden, unterhalb von denen keine Veränderung des Lenkwinkels ($\delta$HA) der elektronisch gelenkten Achse (NLA) durchgeführt wird.

**Fig. 1**

Europäisches
Patentamt

European
Patent Office

Office européen
des brevets

**EUROPÄISCHER RECHERCHENBERICHT**

Nummer der Anmeldung

EP 08 01 1826

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 103 10 942 A1 (KNORR BREMSE SYSTEME [DE]) 7. Oktober 2004 (2004-10-07) | 1,2,5-10 | INV. B62D6/00 B62D7/15 B62D61/10 |
| Y | * Absätze [0005] - [0007], [0025], [0026] * ----- | 3,4 | |
| Y | DE 103 28 685 A1 (DAIMLER CHRYSLER AG [DE]) 13. Januar 2005 (2005-01-13) * Absatz [0032] * ----- | 3,4 | |
| X | EP 0 678 439 A (DAIMLER BENZ AG [DE] DAIMLER CHRYSLER AG [DE]) 25. Oktober 1995 (1995-10-25) * Seite 4, Zeilen 41-49 * * Seite 5, Zeile 45 - Seite 6, Zeile 30 * * Anspruch 7 * ----- | 1,2,5,7,9 | |
| A | US 2003/060959 A1 (LIN WILLIAM CHIN-WOEI [US] ET AL) 27. März 2003 (2003-03-27) * Absätze [0047], [0048] * ----- | 1-10 | |
| A | DE 41 23 232 A1 (DAIMLER BENZ AG [DE]) 14. Januar 1993 (1993-01-14) * Seite 3, Zeilen 21-37 * ----- | 1-10 | RECHERCHIERTE SACHGEBIETE (IPC) B62D B60T B60W |
| A | DE 101 08 421 A1 (SEUSER ULRICH H [DE]) 20. September 2001 (2001-09-20) * Spalte 2, Zeile 56 - Spalte 3, Zeile 5 * ----- | 1-10 | |

Der vorliegende Recherchenbericht wurde für alle Patentansprüche erstellt

| Recherchenort | Abschlußdatum der Recherche | Prüfer |
|---|---|---|
| Berlin | 12. November 2008 | Nielles, Daniel |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

.................................................................

& : Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 08 01 1826

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-11-2008

| Im Recherchenbericht angeführtes Patentdokument | | Datum der Veröffentlichung | Mitglied(er) der Patentfamilie | | Datum der Veröffentlichung |
|---|---|---|---|---|---|
| DE 10310942 | A1 | 07-10-2004 | AT | 358620 T | 15-04-2007 |
| | | | EP | 1606156 A1 | 21-12-2005 |
| | | | WO | 2004080783 A1 | 23-09-2004 |
| | | | JP | 2006520297 T | 07-09-2006 |
| | | | US | 2007169969 A1 | 26-07-2007 |
| DE 10328685 | A1 | 13-01-2005 | KEINE | | |
| EP 0678439 | A | 25-10-1995 | BR | 9501716 A | 14-11-1995 |
| | | | DE | 4413413 C1 | 08-06-1995 |
| US 2003060959 | A1 | 27-03-2003 | KEINE | | |
| DE 4123232 | A1 | 14-01-1993 | FR | 2678885 A1 | 15-01-1993 |
| | | | GB | 2257761 A | 20-01-1993 |
| | | | IT | 1254408 B | 14-09-1995 |
| | | | JP | 2521217 B2 | 07-08-1996 |
| | | | JP | 5193392 A | 03-08-1993 |
| | | | US | 5471388 A | 28-11-1995 |
| DE 10108421 | A1 | 20-09-2001 | KEINE | | |

EPO FORM P0461

Für nähere Einzelheiten zu diesem Anhang : siehe Amtsblatt des Europäischen Patentamts, Nr.12/82